# EUROPÄISCHE PATENTSCHRIFT

(11) **EP 0 816 634 B1**
(45) Veröffentlichungstag und Bekanntmachung des Hinweises auf die Patenterteilung: **02.10.2002**
(21) Anmeldenummer: 97250202.5
(22) Anmeldetag: 01.07.1997
(51) Int. Cl.: F01D 5/02

(54) **Vorrichtung zur lösbaren Befestigung eines Laufrades einer Turbomaschine**
Releasably fixing a rotor wheel of a turbomachine on a shaft
Fixation démontable d'une roue d'une turbomachine sur une arbre

(30) Priorität: 01.07.1996 DE 19627346
(43) Veröffentlichungstag der Anmeldung: 07.01.1998
(73) Patentinhaber: SIEMENS AKTIENGESELLSCHAFT, 80333 München (DE)
(72) Erfinder: Gold, Peter Werner, Dr.-Ing., 52066 Aachen (DE); Casper, Thomas, Dipl.-Ing., 66636 Theley (DE)
(74) Vertreter: Meissner, Peter E., Dipl.-Ing.

(56) Entgegenhaltungen:
- EP-A- 0 342 520
- WO-A-90/06420
- CH-A- 269 605
- DE-A- 1 475 380
- DE-A- 3 532 348
- DE-A- 3 625 996
- DE-C- 973 550
- DE-C- 4 445 297
- GB-A- 2 102 536

## Beschreibung

Die Erfindung betrifft eine Vorrichtung zur lösbaren Befestigung eines Laufrades, insbesondere Radiallaufrad an einer Turbomaschine gemäß dem Oberbegriff des Hauptanspruches.

Ein derartige Befestigung eines Laufrades ist aus der DE 36 25 996 bekannt.

Aus der EP 0575017 A1 ist eine weitere Befestigungsvorrichtung eines Radiallaufrades bekannt (siehe dort Figur 2). Diese weist eine Dehnschraube auf, die sich durch das Laufrad bis zum Wellenteil erstreckt. Im Wellenteil ist eine Gewindebohrung zur Aufnahme der Dehnschraube vorgesehen. Die eigentliche Drehmomentübertragung erfolgt über eine Hirth-Verzahnung, die auf der Rückseite des Laufrades und auf der Stirnseite des Wellenteiles angeordnet ist. Für den üblichen Anwendungsbereich ist das in dieser Figur dargestellte Zwischenteil (Bezugszeichen 16) entbehrlich, so daß Laufrad und Wellenteil unmittelbar miteinander verbunden sind. Das Spannen der Hirth-Verzahnung gegeneinander erfolgt mittels einer Mutter, die auf dem durch das Laufrad sich erstreckenden Gewindeabschnitt der Dehnschraube aufgeschraubt wird. Nachteilig bei dieser Konstruktion ist, daß die Hirth-Verzahnung in der Herstellung sehr teuer ist.

Aufgabe der Erfindung ist es, eine Vorrichtung zur lösbaren Befestigung eines Laufrades insbesondere eines Radiallaufrades an einer Turbomaschine anzugeben, die kostengünstig herstellbar ist und bei geringer Baugröße eine hohe Drehmomentübertragbarkeit sowie eine gute Wuchtreproduzierbarkeit aufweist.

Diese Aufgabe wird mit den Merkmalen des Hauptanspruches gelöst. Vorteilhafte Weiterbildungen sind Bestandteil von Unteransprüchen.

Kernpunkt der Erfindung ist, daß eine Verspanneinheit verwendet wird, die mit einer Spannschraube zusammenwirkt. Hauptteil der Verspanneinheit ist eine Spannbuchse, auf deren äußerer Mantelfläche mindestens ein an sich bekanntes Spannelement in Form eines Kegelringpaares angeordnet ist. Der Außenring des Spannelementes wird beim Anziehen der Spannelemente im Durchmesser vergrößert, so daß er kraftschlüssig an der Innenwand der hülsenartigen Verlängerung des Laufrades zur Anlage kommt. Der Innenring wird beim Anziehen der Spannschraube im Durchmesser verkleinert, so daß er kraftschlüssig an der äußeren Mantelfläche der Spannbuchse zur Anlage kommt. Die dabei entstehende Normalkraft ist so bemessen, daß sie für eine schlupffreie Drehmomentübertragung zwischen Welle und Laufrad ausreichend ist. Anders ausgedrückt wird die hülsenartige Verlängerung des Laufrades radial gegen die dickwandigere Buchse des Wellenteiles verspannt. Über die Ringfläche zwischen der hülsenartigen Verlängerung und der dickwandigeren Buchse wird das Drehmoment übertragen. Kennzeichnendes Merkmal der erfindungsgemäß ausgebildeten Verbindung ist, daß über denselben Durchmesser die radiale Zentrierung und die anschließende radiale Verspannung erfolgt. Die Anzahl der benötigten Teile und der erforderliche Platz wird minimiert, wenn in der Welle eine Gewindebohrung angeordnet wird, in die die Spannschraube einschraubbar ist und wenn der Kopf der Spannschraube auf der dem Laufrad zugewandten Stirnseite der Spannbuchse zur Anlage kommt. Das letztgenannte Merkmal hat zudem noch den Vorteil, daß die Spannschraube vom "heißen" Bereich des Laufrades ausreichend weit entfernt ist und insofern die Wärmebeanspruchung der Spannschraube niedrig ist. Eine weitere Variante sieht vor, die Spannbuchse mit einer Gewindebohrung zu versehen, deren Durchmesser so gewählt ist, daß die Spannschraube durch die Verspanneinheit hindurchsteckbar ist. Diese Anordnung hat den Vorteil, daß bei Schwierigkeiten mit dem Lösen der Verspanneinheit über eine in die Spannbuchse einschraubbare Hilfsschraube, deren Durchmesser größer ist als der der Spannschraube, die Verspanneinheit abgedrückt werden kann. Als weiterer Vorteil der erfindungsgemäß ausgebildeten Verbindung ist noch zu erwähnen, daß auch nach einer Demontage und erneuter Montage der Wuchtzustand wie bei der Erstwuchtung fast erhalten bleibt und deshalb auf eine erneute Auswuchtung verzichtet werden kann. In einigen Fällen kann es von Vorteil sein, wenn die Verspanneinheit vor dem zu verdichtenden Medium geschützt wird. In einem solchen Fall ist im Kontaktbereich zwischen der dickwandigeren Buchse und dem zapfenartig ausgebildeten Ende des Laufrades eine Dichtung angeordnet. Darüber hinaus wird die Bohrung des Laufrades mittels einer Verschlußschraube verschlossen.

In der Zeichnung wird anhand einiger Ausführungsbeispiele die erfindungsgemäße Befestigungsvorrichtung näher erläutert. Es zeigen:
- Figur 1: in einem Längsschnitt eine erste Ausführungsform der erfindungsgemäßen Laufradbefestigung
- Figur 2: im gleichen Längsschnitt eine zweite Ausführungsform
- Figur 3: im gleichen Längsschnitt eine dritte Ausführungsform
- Figur 4: im gleichen Längsschnitt eine vierte Ausführungsform
- Figur 5: im gleichen Längsschnitt eine Variante der Ausführung gemäß Figur 4

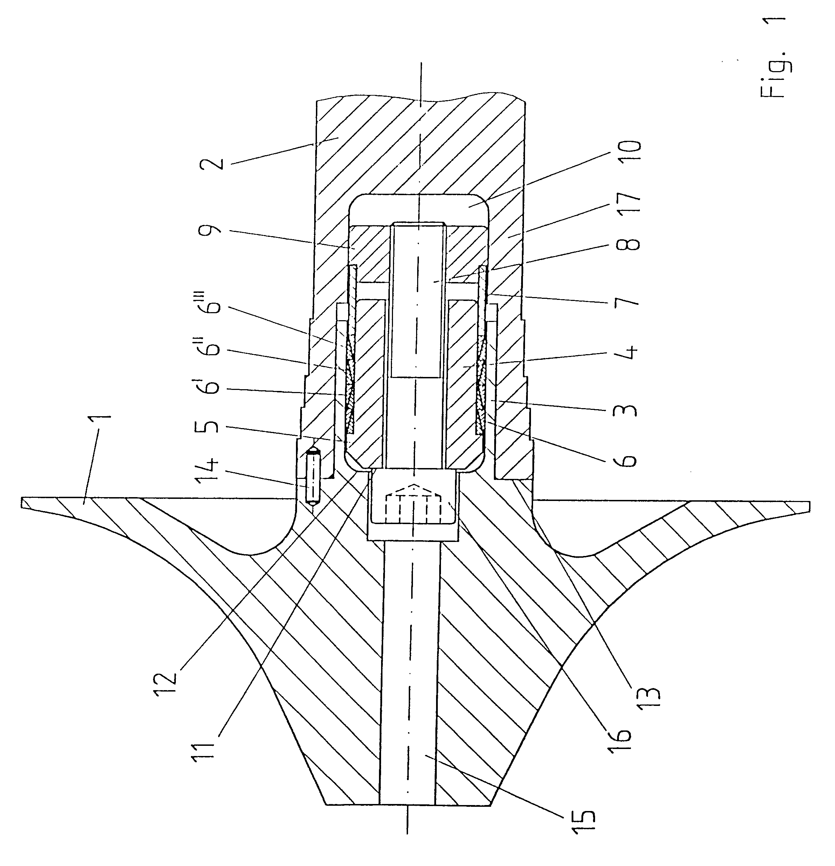

Figur 1 zeigt in einem Längsschnitt eine erste Ausführungsform der erfindungsgemäßen Laufradbefestigung. Das Laufrad 1, hier als Radiallaufrad skizzenhaft angedeutet, weist eine zum Wellenteil 2 hin sich erstreckende hülsenartige Verlängerung 3 auf. In dieser Verlängerung 3 ist im wesentlichen die erfindungsgemäße Verspanneinheit angeordnet. Sie besteht in diesem Ausführungsbeispiel aus einer Spannbuchse 4, die an einem Ende einen kragenartig nach außen sich erstreckenden Absatz 5 aufweist. Auf der äußeren Mantelfläche der Spannbuchse 4 sind in diesem Ausführungsbeispiel insgesamt vier an sich bekannte Spannelemente 6, 6', 6", 6''' in Form von Kegelringpaaren angeordnet, und zwar so, daß der Absatz 5 der Spannbuchse 4 nach der einen Seite hin einen Anschlag bildet. Als Anschlag für die Spannelemente 6 - 6"' auf der Wellenseite 2 dient eine auf der Spannbuchse 4 aufschiebbare Hülse 7. Diese Hülse 7 stützt sich mit dem anderen freien Ende auf einer mit einer durch eine Bohrung 43 der Spannbuchse 4 sich erstreckenden Spannschraube 8 zusammenwirkenden Mutter 9 ab. Die Mutter 9 wird in einer zylindrischen Ausnehmung 10 des Wellenteiles 2 geführt. In diesem Ausführungsbeispiel sind die insgesamt vier Spannelemente 6 - 6"' so angeordnet, daß die Schrägen zweier Spannelemente 6, 6' abfallend in Richtung Wellenteil 2 liegen und die Schrägen der zwei anschließenden Spannelemente 6", 6"' genau entgegengesetzt. Mit dieser Anordnung kann die Wirkung der Spannelemente 6 - 6"' optimal ausgenutzt werden.

Die Montage erfolgt in der Weise, daß die Verspanneinheit einschließlich der Spannschraube 8 in die hülsenartige Verlängerung 3 des Laufrades 1 geschoben wird, und zwar so weit, bis die dem Laufrad 1 zugewandte Stirnseite 11 der Spannbuchse 4 an der Innenseite 12 der hülsenartigen Verlängerung 3 zur Anlage kommt. Anschließend wird das Laufrad 1 zusammen mit der Verspanneinheit in die zylindrische Ausnehmung 10 des Wellenteiles 2 geschoben, bis die Stirnseite 13 der dickwandigeren Buchse 17 der Ausnehmung 10 des Wellenteiles 2 am Laufrad 1 zur Anlage kommt. Zur tangentialen Fixierung dient ein Paßstift 14, der in der jeweiligen Sacklochbohrung des Laufrades 1 und des Wellenteils 2 zum einen fest und zum anderen mit Spiel eingesetzt ist. Auf diese Weise wird eine Doppelpassung in bezug auf das Zusammenspiel Wellenteil 2 mit hülsenartiger Verlängerung 3 des Laufrades 1 vermieden. Das Festziehen erfolgt mittels eines Innensechskantschlüssels (hier nicht dargestellt), der durch die Bohrung 15 des Laufrades 1 bis zum Kopf 16 der Spannschraube 8 gesteckt wird. Durch Drehen der Spannschraube 8 wird die Mutter 9 axial bewegt, so daß über die Hülse 7 Druck auf die Spannelemente 6 - 6"' ausgeübt wird. Diese haben durch die Anschrägung die Möglichkeit, radial auszuweichen, und zwar so, daß durch die Anpressung an die Innenwand der hülsenartigen Verlängerung 3 eine hohe Normalkraft erzeugt wird. Die elastische Aufweitung der hülsenartigen Verlängerung 3 hat zur Folge, daß diese gegen die dickwandigere Buchse 17 der Ausnehmung 10 des Wellenteiles 2 gepreßt wird. Die Dicke der Hülse 17 der Ausnehmung 10 ist so bemessen, daß die durch die Verspanneinheit erzeugte Normalkraft ohne bleibende Verformung aufgenommen werden kann. Die Drehmomentübertragung zwischen Wellenteil 2 und Laufrad 1 erfolgt über den durch die Normalkraft erzeugten Reibschluß zwischen Buchse 17 der Ausnehmung 10 des Wellenteiles 2 und der hülsenartigen Verlängerung 3 des Laufrades 1. Um den Reibwert zwischen den Spannelementen 6 - 6"' zu erniedrigen, werden diese mit Fett eingeschmiert. Beispielsweise kann ein solches Fett Molykote sein. Andere Fette sind dafür ebenfalls geeignet. Durch die Verkleinerung des Reibwertes kann die Wirkung der Spannelemente 6 - 6"' besser ausgenutzt, d. h. die Spannschraube 8 kann kleiner gewählt werden. Der Reibwert zwischen der hülsenartigen Verlängerung 3 des Laufrades 1 und der dickwandigeren Buchse 17 des Wellenteiles 2 sollte dagegen möglichst groß gewählt werden, da an dieser Stelle, wie schon zuvor erwähnt, das Drehmoment übertragen wird.

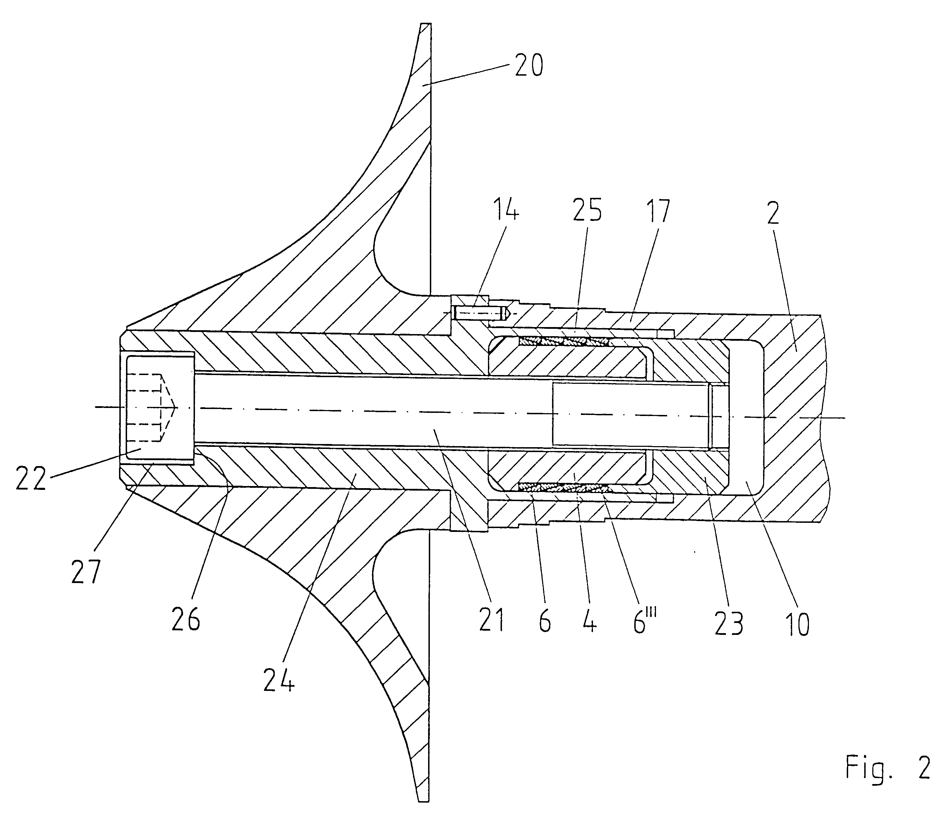

Figur 2 zeigt im gleichen Längsschnitt wie Figur 1 eine zweite Ausführungsform, wobei für gleiche Teile gleiche Bezugszeichen gewählt worden sind. In diesem Ausführungsbeispiel ist das Laufrad 20 auf einem flanschartig ausgebildeten Zapfen 24 aufgeschoben, wobei der Zapfen 24 ebenfalls eine hülsenartige Verlängerung 25 aufweist. Die den Gegendruck erzeugende auf die Spannbuchse 4 aufschiebbare Hülse ist als einteiliges Mutterelement 23 ausgebildet. Im Unterschied zu Figur 1 sind die Schrägen der Spannelemente 6 - 6"' alle abfallend zum Wellenteil 2 hin gerichtet. Der Montageablauf ist im Vergleich zu Figur 1 etwas abgewandelt. Zuerst wird das Laufrad 20 auf dem flanschartig ausgebildeten Zapfen 24 befestigt, beispielsweise durch Aufschrumpfen. Danach wird die Verspanneinheit in die hülsenartige Verlängerung 25 eingeschoben und die Spannschraube 21 lose eingedreht. Danach wird das Laufrad 20 mitsamt der Verspanneinheit in die Ausnehmung 10 des Wellenteiles 2 geschoben. Der Paßstift 14 dient wieder als tangentiale Fixierung. Durch Aufstecken eines hier nicht dargestellten Innensechskantschlüssels auf den Kopf 22 der Spannschraube 21 wird diese gedreht und damit die Mutter 23 axial bewegt. Beim Anziehen kommt der Kopf 22 der Spannschraube 21 an der Stirnseite 26 der Ausnehmung 27 des Zapfens 24 zur Anlage. Die Erzeugung einer ausreichend hohen Normalkraft für den erforderlichen Reibschluß zwischen der hülsenartigen Verlängerung 25 des Zapfens 24 und der dickwandigeren Buchse 17 des Wellenteiles 2 ist dann gleich wie beim Ausführungsbeispiel gemäß Figur 1.

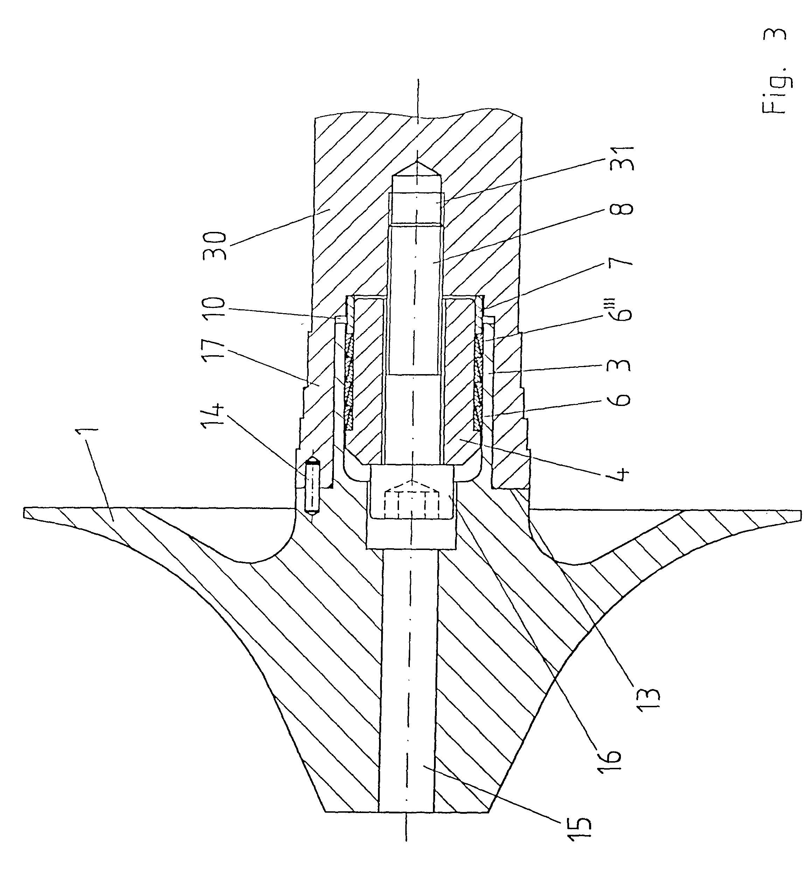

Figur 3 zeigt ein drittes Ausführungsbeispiel im gleichen Längsschnitt wie Figur 1 und 2. Auch hier sind für gleiche Teile gleiche Bezugszeichen verwendet worden. Im Unterschied zu Figur 1 wird in diesem Ausführungsbeispiel keine separate Mutter verwendet, sondern die Mutter wird durch eine im Wellenteil 30 angeordnete Gewindebohrung 31 gebildet. In diese Gewindebohrung 31 ist die Spannschraube 8 eindrehbar. Wie man erkennen kann, ist diese Variante sehr kurzbauend und die Steifigkeit der Verbindung ist größer, da die Buchse 17 der Ausnehmung 10 des Wellenteiles 30 erheblich kürzer ist im Vergleich zur Ausführung gemäß Figur 1. Die Gewindebohrung 31 im Wellenteil 30 ist entsprechend sorgfältig herzustellen, damit keine die Wechselfestigkeit herabsetzenden Kerbspannungen entstehen. Der Montageablauf ist vergleichbar wie Fig. 1, so daß sich eine Wiederholung erübrigt.

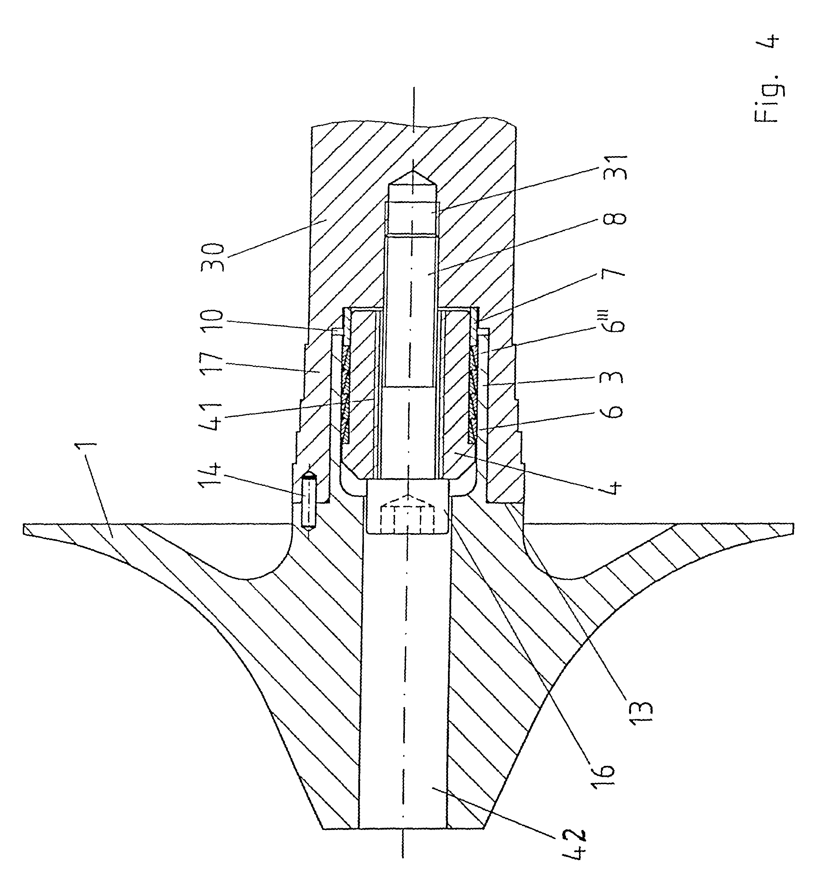

Figur 4 zeigt ein viertes Ausführungsbeispiel im gleichen Längsschnitt wie die vorhergehenden Figuren. Auch hier sind für gleiche Teile gleiche Bezugszeichen verwendet worden. Im Unterschied zu den Figuren 1 bis 3 ist in der Spannbuchse 40 statt einer glatten Bohrung eine Gewindebohrung 41 angeordnet, die achsgleich liegt mit der im Wellenteil 30 angeordneten Gewindebohrung 31. Die erstgenannte Gewindebohrung 41 in der Spannbuchse 40 weist einen größeren Durchmesser auf, so daß die Spannschraube 8 durch sie hindurchsteckbar ist. Die Bohrung 42 im Laufrad 1 ist erweitert und zwar so, daß sie etwas größer ist als der Schraubenkopf 16 der Spannschraube 8. Diese Anordnung hat den Vorteil, daß bei Schwierigkeiten des sich selbst Lösens der Verspanneinheit mittels einer hier nicht dargestellten Hilfsschraube, die in die Gewindebohrung 41 der Spannbuchse 40 einschraubbar ist, die Verspanneinheit leicht abgedrückt werden kann.

Zur Verbesserung der Anströmverhältnisse für das Laufrad 1, 20 (Fig. 1-4) kann im Bedarfsfall eine Nabenkappe (hier nicht dargestellt) vorgesehen werden. Der Zapfen der Nabenkappe würde in die jeweilige Bohrung (15, 42 (Fig. 1, 3, 4) des Laufrades oder in die Ausnehmung des Schraubenkopfes 22 der Spannschraube 21 (Fig. 2) gesteckt werden.

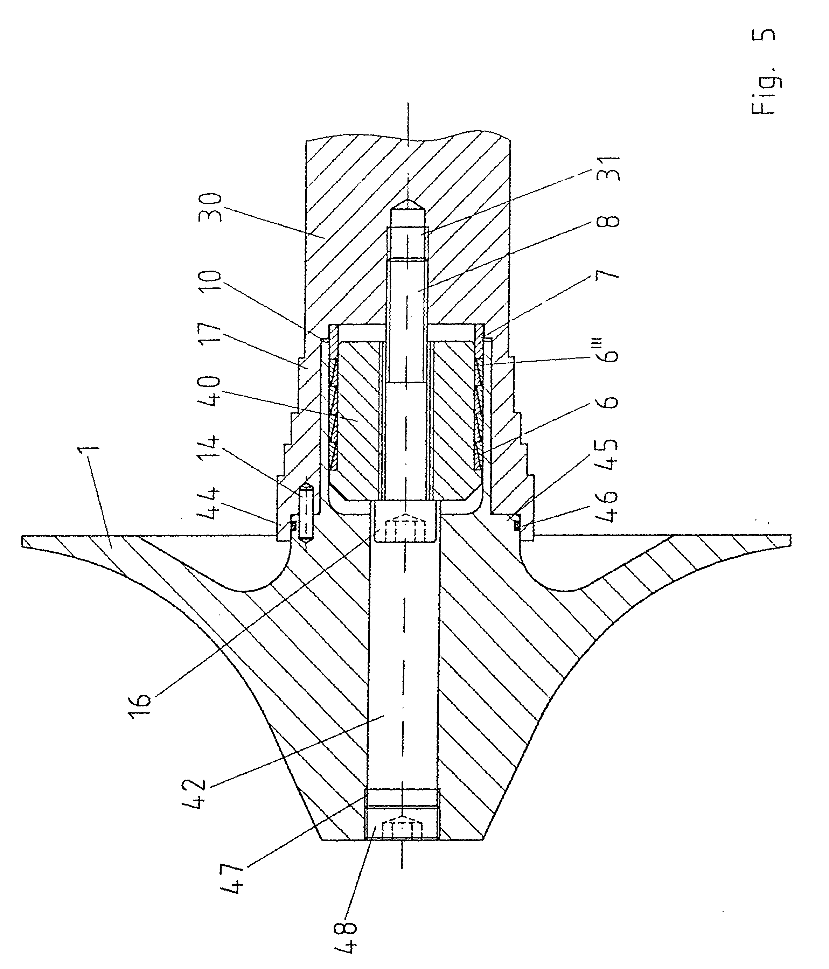

Figur 5 zeigt ein Variante der Ausführung gemäß Figur 4, wobei für gleiche Teile gleiche Bezugszeichen verwendet worden sind. Im Unterschied zu Figur 4 weist die dickwandigere Buchse 17 der Ausnehmung 10 des Wellenteiles 30 einen zum Laufrad 1 hin gerichteten Kragen 44 auf, der das zapfenartig ausgebildete Ende 45 des Laufrades 1 umfaßt. In diesem Endbereich 45 des Laufrades 1 ist in einer Ringnut eine Dichtung 46 beispielsweise ein O-Ring angeordnet. Auf diese Weise wird verhindert, daß das auf der Rückseite des Laufrades abfließende Medium in den Bereich der Verspanneinheit eindringen kann. Statt einer Nabenkappe wird in diesem Ausführungsbeispiel in einer Gewindesacklochbohrung 47, die im stirnseitigen Bereich der Bohrung 42 des Laufrades 1 angeordnet ist, eine Verschlußschraube 48 eingeschraubt. Diese Verschlußschraube 48 dient als Abdichtung der Verspanneinheit. Der Durchmesser der Gewindesacklochbohrung 47 wird dabei so gewählt, daß der Kopf 16 der Spannschraube 8 ohne Probleme durch sie hindurchsteckbar ist.

## Patentansprüche

1. Vorrichtung zur lösbaren Befestigung eines Laufrades (1, 20), insbesondere Radiallaufrad an der Welle (2, 30) einer Turbomaschine mit einem die Welle mit dem Laufrad verbindenden und achsgleich mit dem Laufrad und der Welle liegendem Schraubenelement, das als Spannschraube (8, 21) ausgebildet ist, die mit einer Verspanneinheit zusammenwirkt,
**dadurch gekennzeichnet,**
**dass** die Verspanneinheit in einer der Welle (2, 30) zugewandten hülsenartig ausgebildeten Verlängerung (3, 25) des Laufrades (1,20) angeordnet ist, die wiederum von einer dickwandigeren Buchse (17) einer entsprechend zylindrischen Ausnehmung (10) der Welle (2, 30) umfaßt wird.

2. Vorrichtung nach Anspruch 1,
**dadurch gekennzeichnet,**
**dass** die Verspanneinheit eine Spannbuchse (4, 40) aufweist, auf dessen äußerer Mantelfläche mindestens ein an sich bekanntes Spannelement (6 - 6"') in Form eines Kegelringpaares angeordnet ist, das auf einer Seite an einem kragenartigen Absatz (5) der Spannbuchse (4, 40) und auf der anderen Seite gegen eine auf die Spannbuchse (4, 40) aufschiebbaren Hülse (7, 23) zur Anlage kommt und die Spannschraube (8, 21) in ein mit der Hülse (7, 23) zusammenwirkenden Mutterelement einschraubbar ist.

3. Vorrichtung nach Anspruch 1 und 2,
**dadurch gekennzeichnet,**
**dass** das Mutterelement als eine in der Ausnehmung (10) der Welle (2) angeordnete Mutter (9, 23) ausgebildet ist.

4. Vorrichtung nach Anspruch 3,
**dadurch gekennzeichnet,**
**dass** die Mutter (23) mit der aufschiebbaren Hülse eine Einheit bildet.

5. Vorrichtung nach Anspruch 1 und 2,
**dadurch gekennzeichnet,**
**daß** die Welle (30) eine Gewindebohrung (31) zur Aufnahme der Spannschraube (8) aufweist.

6. Vorrichtung nach einem der Ansprüche 1 bis 5,
**dadurch gekennzeichnet,**
**daß** der Kopf (16) der Spannschraube (8) an der dem Laufrad (1) zugewandten Stirnfläche (11) der Spannbuchse (4, 40) zur Anlage kommt.

7. Vorrichtung nach einem der Ansprüche 1, 2, 5 und 6,
**dadurch gekennzeichnet,**
**daß** die Spannbuchse (40) eine Gewindebohrung (41) aufweist, deren Innendurchmesser größer ist als der Schaftdurchmesser der Spannschraube (8) und die achsgleich liegt mit der in der Welle (30) angeordneten Gewindebohrung (31).

8. Vorrichtung nach einem der Ansprüche 1 bis 5,
**dadurch gekennzeichnet,**
**daß** das Laufrad (20) auf einem flanschartig ausgebildeten Zapfen (24) angeordnet ist, durch den sich die Spannschraube (21) erstreckt und der mit der hülsenartigen Verlängerung (25) eine Einheit bildet, wobei der Kopf (22) der Spannschraube (21) in einer im Laufradbereich liegenden zylindrischen Ausnehmung (27) des Zapfens (24) zur Anlage kommt.

9. Vorrichtung nach einem der Ansprüche 1, 2, 5, 6 und 7,
**dadurch gekennzeichnet,**
**daß** die dickwandigere Buchse (17) der Ausnehmung (10) der Welle (2, 30) einen dem Laufrad zugewandten Kragen (44) aufweist, der das zapfenartig ausgebildete Ende (45) des Laufrades (1) umfaßt und im Kontaktbereich eine Dichtung (46) angeordnet ist und die Bohrung (42) des Laufrades (1) mit einer Verschlußschraube (48) verschlossen ist.

## Claims

1. Device for releasably fixing a rotor (1, 20), in particular a radial-flow rotor, on the shaft (2, 30) of a turbomachine, with a screw element which connects the shaft to the rotor, is located coaxially with the rotor and the shaft and is formed as a clamping screw (8, 21) which co-operates with a gripping unit,
**characterised in**
**that** the gripping unit is disposed in a sleeve-like extension (3, 25), which faces the shaft (2, 30), of the rotor (1, 20), which extension is in turn encompassed by a thicker-walled bush (17) of a correspondingly cylindrical recess (10) of the shaft (2, 30).

2. Device according to Claim 1,
**characterised in**
**that** the gripping unit comprises a clamping bush (4, 40), on the outer circumferential surface of which at least one clamping element (6 - 6"'), which is known per se, in the form of a tapered ring pair is disposed, the latter coming to lie on one side against a collar-like offset (5) of the clamping bush (4, 40) and on the other side against a sleeve (7, 23) which can be pushed onto the clamping bush (4, 40), and the clamping screw (8, 21) can be screwed into a nut element which co-operates with the sleeve (7, 23).

3. Device according to Claims 1 and 2,
**characterised in**
**that** the nut element is formed as a nut (9, 23) which is disposed in the recess (10) of the shaft (2).

4. Device according to Claim 3,
**characterised in**
**that** the nut (23) forms a unit with the push-on sleeve.

5. Device according to Claims 1 and 2,
**characterised in**
**that** the shaft (30) comprises a tapped hole (31) for accommodating the clamping screw (8).

6. Device according to any one of Claims 1 to 5,
**characterised in**
**that** the head (16) of the clamping screw (8) comes to lie against the end face (11), facing the rotor (1), of the clamping bush (4, 40).

7. Device according to any one of Claims 1, 2 5 and 6,
**characterised in**
**that** the clamping bush (40) comprises a tapped hole (41) whose inside diameter is greater than the shank diameter of the clamping screw (8) and which is located coaxially with the tapped hole (31) disposed in the shaft (30).

8. Device according to any one of Claims 1 to 5,
**characterised in**
**that** the rotor (20) is disposed on a flange-like pin (24) through which the clamping screw (21) extends and which forms a unit with the sleeve-like extension (25), wherein the head (22) of the clamping screw (21) comes to lie in a cylindrical recess (27), located in the rotor region, of the pin (24).

9. Device according to any one of Claims 1, 2, 5, 6 and 7,
**characterised in**
**that** the thicker-walled bush (17) of the recess (10) of the shaft (2, 30) comprises a collar (44) which faces the rotor and encompasses the pin-like end (45) of the rotor (1), a seal (46) is disposed in the contact region, and the bore (42) of the rotor (1) is closed by a screw plug (48).

## Revendications

1. Dispositif pour la fixation amovible d'un rotor (1, 20), en particulier un rotor radial sur l'arbre (2, 30) d'une turbomachine, comportant un élément de vissage reliant l'arbre au rotor et s'étendant sur le même axe avec le rotor et l'arbre, élément qui est réalisé comme vis de serrage (8, 21) qui coopère avec une unité de serrage,
**caractérisé en ce que** l'unité de serrage est agencée dans un prolongement (3, 25) du rotor radial (1, 20), en regard de l'arbre (2, 30), réalisé du type manchon, qui, à son tour, est entouré par une douille (17) à paroi plus épaisse d'un évidement (10) cylindrique correspondant de l'arbre (2, 30).

2. Dispositif selon la revendication 1,
**caractérisé en ce que** l'unité de serrage présente une douille de serrage (4, 40) sur la surface d'enveloppe externe de laquelle il est agencé au moins un élément de serrage (6 - 6"') connu en soi sous forme d'une paire de bagues coniques qui, d'un côté, vient en appui contre un décrochement (5) du type collet de la douille de serrage (4, 40) et, de l'autre côté, vient en appui contre un manchon (7, 23) pouvant être enfilé sur la douille de serrage (4, 40), et la vis de serrage (8, 21) peut être vissée dans un élément d'écrou coopérant avec le manchon (7, 23).

3. Dispositif selon les revendications 1 et 2,
**caractérisé en ce que** l'élément d'écrou est réalisé comme un écrou (9, 23) agencé dans l'évidement (10) de l'arbre (2).

4. Dispositif selon la revendication 3,
**caractérisé en ce que** l'écrou (23) forme une unité avec le manchon pouvant être enfilé.

5. Dispositif selon les revendications 1 et 2,
**caractérisé en ce que** l'arbre (30) présente un perçage taraudé (31) pour recevoir la vis de serrage (8).

6. Dispositif selon une des revendications 1 à 5,
**caractérisé en ce que** la tête (16) de la vis de serrage (8) vient en appui contre la face frontale (11), en regard du rotor (1), de la douille de serrage (4, 40).

7. Dispositif selon une des revendications 1, 2, 5 et 6,
**caractérisé en ce que** la douille de serrage (40) présente un perçage taraudé (41), dont le diamètre interne est plus grand que le diamètre de tige de la vis de serrage (8) et qui présente le même axe que le perçage taraudé (31) prévu dans l'arbre (30).

8. Dispositif selon une des revendications 1 à 5,
**caractérisé en ce que** le rotor (20) est agencé sur un tourillon (24) réalisé à la manière d'une bride, à travers lequel s'étend la vis de serrage (21) et qui, avec le prolongement (25) du type manchon, forme une unité, la tête (22) de la vis de serrage (21) venant en appui dans un évidement (27) du tourillon (24), cylindrique, se trouvant dans la zone du rotor.

9. Dispositif selon une des revendications 1, 2, 5, 6 et 7,
**caractérisé en ce que** la douille (17) à paroi plus épaisse de l'évidement (10) de l'arbre (2, 30) présente un collet (44) en regard du rotor, qui comporte l'extrémité (45) du rotor (1) réalisée à la manière d'un tourillon et, dans la zone de contact, il est agencé un joint étanche (46) et le perçage (42) du rotor (1) est fermé par une vis de fermeture (48).
